# EUROPEAN PATENT SPECIFICATION

(11) **EP 3 260 799 B1**
(45) Date of publication and mention of the grant of the patent: **04.12.2019**
(21) Application number: 16754885.8
(22) Date of filing: 20.01.2016
(51) Int. Cl.: F25B 47/02, F25D 21/06, F25B 49/02

(54) **REFRIGERATING DEVICE**
KÜHLVORRICHTUNG
DISPOSITIF FRIGORIFIQUE

(30) Priority: 27.02.2015 JP 2015039332
(43) Date of publication of application: 27.12.2017
(73) Proprietor: Daikin Industries, Ltd., Osaka-shi, Osaka 530-8323 (JP)
(72) Inventor: TAKEUCHI, Ryuuji, Osaka 530-8323 (JP); SHINOHARA, Iwao, Osaka 530-8323 (JP)
(74) Representative: Hoffmann Eitle
(86) International application number: PCT/JP2016/000274
(87) International publication number: WO 2016/136128

(56) References cited:
- EP-A2- 2 428 752
- JP-A- S61 110 869
- JP-A- S61 110 869
- JP-A- 2002 277 145
- US-A- 4 993 233
- US-A1- 2012 266 621

## Description

### TECHNICAL FIELD

The present invention relates to a refrigerating apparatus, and more particularly relates to a refrigerating apparatus including a refrigerant circuit with an internal heat exchanger that cools an internal space by a refrigeration cycle operation, and a controller that controls an operation in a cooling mode and an operation in a defrosting mode.

### BACKGROUND ART

A refrigerating apparatus that has been known in the art includes a refrigerant circuit with an internal heat exchanger that cools an internal space by a refrigeration cycle operation (see, for example, Patent Document 1). This type of refrigerating apparatus includes a controller that controls a cooling mode in which an internal space is cooled. Moreover, this controller generally controls an operation in a defrosting mode in which frost forming on the internal heat exchanger is removed as well.

In a known refrigerating apparatus, a heat exchanger is generally provided with a thermistor that senses the temperature of the heat exchanger. The thermistor senses the temperature of the heat exchanger in a defrosting mode, and terminates the defrosting mode when the temperature of the heat exchanger reaches a set temperature. JP S61 110869 A discloses a refrigerating apparatus with a defrosting control device which adapts the defrosting end temperature according to the detected frost formation amount.

### CITATION LIST

### PATENT DOCUMENTS

Patent Document 1: Japanese Unexamined Patent Publication No. 2014-070830

### SUMMARY OF THE INVENTION

### TECHNICAL PROBLEM

In the known refrigerating apparatus, the set temperature serving as a condition on which the defrosting mode terminates corresponds to the temperature at which if the amount of frost formed is larger than a predetermined amount, no frost remains. This temperature is defined as a factory setting. Thus, a small amount of frost causes it to take a longer time than required to perform an operation in a defrosting mode, resulting in an increase in the internal temperature.

The set condition on which the defrosting mode terminates may be changed on the spot. However, in that case, the set condition needs to be manually changed. In consideration of the influence of the temperature and humidity varying seasonally, the condition on which the defrosting mode terminates needs to be frequently changed.

In view of the foregoing background, it is therefore an object of the present invention to prevent the period of time during which an operation is performed in a defrosting mode from being longer than required, without manually changing the condition on which the defrosting mode terminates.

### SOLUTION TO THE PROBLEM

The present invention is defined by the independent claim. The dependent claims describe optional features and preferred embodiments.

In general, during the defrosting mode, frost (ice) forming on the internal heat exchanger (71) is deprived of its latent heat and turns into water when removed by melting. Thus, while the ice is turning into water due to the latent heat, the internal heat exchanger (71) is in a temperature stable state where its temperature is stable within a predetermined temperature range including 0°C (e.g., the range from -1°C to +1°C). According to the first aspect, the controller (120) performs control to change the conditions on which defrosting terminates or the defrosting capability in accordance with the period of time during which the temperature stable state continues. For example, a reduction in the period of time during which the temperature stable state continues shortens the period of time during which ice turns into water. Thus, control is performed to terminate the defrosting mode at an earlier timing.

According to a second aspect of the present invention which is an embodiment of the first aspect, if the period of time during which the temperature stable state continues is shorter than the predetermined reference period of time, the controller (120) may perform control to reduce a target sensed temperature of the internal heat exchanger (71) at which defrosting is to terminate.

According to an embodiment, if the period of time during which the temperature stable state continues is shorter than the reference period of time, control is performed to reduce the target sensed temperature of the internal heat exchanger (71) at which defrosting is to terminate or to shorten the target period of time during which the defrosting mode is to continue. This shortens the period of time during which defrosting is performed.

According to a third aspect of the present invention which is an embodiment of the first aspect, if the period of time during which the temperature stable state continues is longer than the predetermined reference period of time, the controller (120) may perform control to improve capability of operation in the defrosting mode.

According to a fourth aspect of the present invention which is an embodiment of the first aspect, if the period of time during which the temperature stable state continues is longer than the predetermined reference period of time, the controller (120) may perform control to improve capabilities of compressors (21, 22, 23).

According to a fifth aspect of the present invention which is an embodiment of the first aspect, if the period of time during which the temperature stable state continues is longer than the predetermined reference period of time, the controller (120) may perform control to increase a rotational speed of an exterior fan (24a).

According to another embodiment, if the period of time during which the temperature stable state continues is longer than the reference period of time, control is performed to improve the capabilities of the compressors (21, 22, 23) or to increase the rotational speed of the exterior fan (24a). This prevents the period of time during which the defrosting mode is performed from increasing.

### ADVANTAGES OF THE INVENTION

According to the first aspect of the present invention, the controller (120) can perform control to change the conditions on which defrosting terminates or the defrosting capability in accordance with the period of time during which the temperature stable state continues. Thus, if control is performed, for example, so that an increase in the period of time during which the temperature stable state continues allows the defrosting mode to terminate at an earlier timing, the period of time during which the defrosting mode is performed can be prevented from being longer than required, without manually setting the conditions on which the defrosting mode terminates. In addition, if the period of time during which the temperature stable state continues is shorter than the reference period of time, control is performed to shorten the target period of time during which the defrosting mode is to continue. This can shorten the period of time during which the defrosting is performed.

According to the second aspect of the present invention, if the period of time during which the temperature stable state continues is shorter than the reference period of time, control is performed to reduce the target sensed temperature of the internal heat exchanger (71) at which defrosting is to terminate. This can shorten the period of time during which the defrosting is performed.

According to the third through fifth aspect of the present invention, if the period of time during which the temperature stable state continues is longer than the reference period of time, control is performed to improve the capabilities of the compressors (21, 22, 23) or to increase the rotational speed of the exterior fan (24a). This prevents the period of time during which the defrosting is performed from increasing.

### BRIEF DESCRIPTION OF THE DRAWINGS

[FIG. 1] FIG. 1 shows a refrigerant circuit of a refrigerating apparatus according to an embodiment of the present invention.
[FIG. 2] FIG. 2 shows a flow of a refrigerant in the refrigerant circuit of the refrigerating apparatus shown in FIG. 1 during a cooling mode.
[FIG. 3] FIG. 3 shows a flow of a refrigerant in the refrigerant circuit of the refrigerating apparatus shown in FIG. 1 during a defrosting mode.
[FIG. 4] FIG. 4 is a flowchart showing an operation in a defrosting mode.
[FIG. 5] FIG. 5 is a flowchart showing how correction for termination of a defrosting mode is controlled.
[FIG. 6] FIG. 6A shows conditions on which a defrosting mode terminates. FIG. 6B is a table showing the temperatures and times used to determine the conditions on which the defrosting mode terminates in an embodiment.
[FIG. 7] FIG. 7 is a flowchart showing how a determination is made whether or not a defrosting period should be corrected.

### DETAILED DESCRIPTION

Embodiments of the present invention will now be described in detail with reference to the drawings.

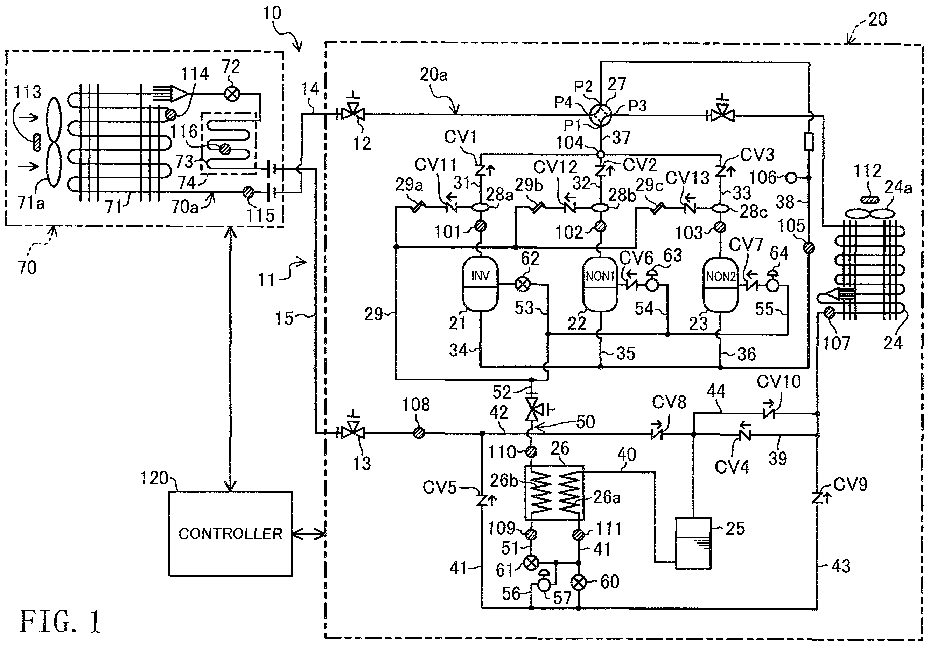

A refrigerating apparatus (10) according to an embodiment cools the interior of a freezer. As shown in FIG. 1, the refrigerating apparatus (10) includes an outdoor unit (a heat source unit) (20), a cooling unit (a utilization-side unit) (70), and two interconnecting pipes (14, 15). The outdoor unit (20) is provided with a heat-source-side circuit (20a). The cooling unit (70) is provided with a utilization-side circuit (70a). The heat-source-side circuit (20a) includes a gas stop valve (12) and a liquid stop valve (13). The gas stop valve (12) is connected to the interconnecting pipe for gas (14) while the liquid stop valve (13) is connected to the interconnecting pipe for liquid (15). The heat-source-side circuit (20a) and the utilization-side circuit (70a) are connected to each other through the interconnecting pipe for gas (14) and the interconnecting pipe for liquid (15). In this manner, the refrigerating apparatus (10) includes a refrigerant circuit (11) that allows a refrigerant to circulate therethrough to perform a refrigeration cycle.

### <Outdoor Unit>

The outdoor unit (20) is installed outdoors. The outdoor unit (20) includes the heat-source-side circuit (20a) and an outdoor fan (24a).

The heat-source-side circuit (20a) is connected to a first compressor (21), a second compressor (22), a third compressor (23), an outdoor heat exchanger (24), a receiver (25), a subcooling heat exchanger (26), a four-way valve (27), and first through third oil separators (28a, 28b, 28c).

Each of the compressors (21, 22, 23) is, for example, a scroll compressor including a compression chamber defined between a fixed scroll and a movable scroll meshing with each other. The first compressor (21) is a variable capacity compressor. In other words, power is supplied to a motor of the first compressor (21) through an inverter. That is to say, the first compressor (21) controls the frequency of power output by the inverter, thereby making the rotational speed (i.e., operation frequency) of the motor variable. The second and third compressors (22) and (23) are fixed-capacity compressors that operate at a fixed rotational speed.

A discharging portion of the first compressor (21) is connected to a first discharge pipe (31), a discharging portion of the second compressor (22) is connected to a second discharge pipe (32), and a discharging portion of the third compressor (23) is connected to a third discharge pipe (33). Outlets of these discharge pipes (31, 32, 33) are connected to a single main discharge pipe (37). The first discharge pipe (31) is connected to a first check valve (CV1), the second discharge pipe (32) is connected to a second check valve (CV2), and the third discharge pipe (33) is connected to a third check valve (CV3). These check valves (CV1-CV3) and other check valves (CV4-CV10) described below in detail each allow a refrigerant to flow in the direction indicated by an associated one of the arrows shown in FIG. 1, but each disallow a refrigerant to flow in the direction opposite to the direction indicated by the associated one of the arrows.

The first through third oil separators (28a, 28b, 28c) are each provided in an intermediate portion of an associated one of the first through third discharge pipes (31, 32, 33) between an associated one of the compressors (21, 22, 23) and an associated one of the check valves (CV1, CV2, CV3). The first through third oil separators (28a, 28b, 28c) separate a lubricant contained in a refrigerant discharged from the associated first through third compressors (21, 22, 23), and send the lubricant back to the associated first through third compressors (21, 22, 23). Specifically, the lubricant separated from the refrigerant by the first through third oil separators (28a, 28b, 28c) is returned to an outlet pipe (52) of an injection circuit (50), described below, through an oil return pipe (29) connected to the first through third oil separators (28a, 28b, 28c). The oil return pipe (29) branches into three branch pipes near its inlet. The branch pipes are respectively connected to the oil separators (28a, 28b, 28c). The branch pipes of the oil return pipe (29) are each provided with an associated one of check valves (CV11, CV12, CV13) and an associated one of capillary tubes (29a, 29b, 29c). The associated check valve (CV11, CV12, CV13) and the associated capillary tube (29a, 29b, 29c) are arranged in this order from an associated one of the oil separators (28a, 28b, 28c) toward the injection circuit (50). Each check valve (CV11, CV12, CV13) allows a lubricant to flow from the oil separator (28a, 28b, 28c) toward the injection circuit (50) but disallows a lubricant to flow in the opposite direction.

A suction portion of the first compressor (21) is connected to a first suction pipe (34), a suction portion of the second compressor (22) is connected to a second suction pipe (35), and a suction portion of the third compressor (23) is connected to a third suction pipe (36). Inlets of the suction pipes (34, 35, 36) are connected to a single main suction pipe (a suction line) (38).

The outdoor heat exchanger (24) is a fin-and-tube heat exchanger. The outdoor fan (24a) is installed near the outdoor heat exchanger (24). The outdoor heat exchanger (24) exchanges heat between a refrigerant flowing therethrough and outdoor air transferred by the outdoor fan (24a).

The receiver (25) is a closed container in which a redundant refrigerant for the refrigerant circuit (11) is stored. The receiver (25) is connected to first and second liquid pipes (39) and (40). The first liquid pipe (39) has two ends respectively connected to a liquid end of the outdoor heat exchanger (24) and the top of the receiver (25). The first liquid pipe (39) is connected to the fourth check valve (CV4). The second liquid pipe (40) has two ends respectively connected to the bottom of the receiver (25) and the subcooling heat exchanger (26).

The subcooling heat exchanger (26) has a first channel (26a) and a second channel (26b), and exchanges heat between refrigerants flowing through the channels (26a, 26b). The first channel (26a) has inlet and outlet ends respectively connected to the second liquid pipe (40) and a third liquid pipe (41). The second channel (26b) is connected to the injection circuit (50). The subcooling heat exchanger (26) exchanges heat between a high-pressure liquid refrigerant flowing through the first channel (26a) and an intermediate-pressure refrigerant flowing through the second channel (26b). Thus, the high-pressure refrigerant in the first channel (26a) is cooled, thereby increasing the degree of subcooling of the high-pressure refrigerant.

The third liquid pipe (41) has two ends respectively connected to the first channel (26a) of the subcooling heat exchanger (26) and the liquid stop valve (13). The third liquid pipe (41) is connected to an outdoor expansion valve (60) and a fifth check valve (CV5) in this order from its inlet toward its outlet. The outdoor expansion valve (60) is an electronic expansion valve having an adjustable degree of opening, and constitutes a liquid expansion valve connected to the third liquid pipe (41) serving as a liquid line of the heat-source-side circuit (20a).

The injection circuit (50) is used to introduce an intermediate-pressure refrigerant into the compressors (21, 22, 23). The injection circuit (50) includes an inlet pipe (51), the outlet pipe (52), a first introduction pipe (53), a second introduction pipe (54), and a third introduction pipe (55). The inlet pipe (51) has inlet and outlet ends respectively connected to the third liquid pipe (41) and the second channel (26b) of the subcooling heat exchanger (26). The inlet pipe (51) is connected to a decompression valve (61). The decompression valve (61) is configured as an electronic expansion valve having an adjustable degree of opening. The outlet pipe (52) has an inlet end connected to the second channel (26b) of the subcooling heat exchanger (26), and an outlet end connected to the three introduction pipes (53, 54, 55). A portion of the inlet pipe (51) located upstream of the decompression valve (61) and a portion of the third liquid pipe (41) between the outdoor expansion valve (60) and the fifth check valve (CV5) are connected to a connection pipe (56). This connection pipe (56) is provided with an open/close valve (57).

The outlet end of the first introduction pipe (53) is connected to a portion of the first compressor (21) in the course of compression (an intermediate-pressure portion). The outlet end of the second introduction pipe (54) is connected to a portion of the second compressor (22) in the course of compression (an intermediate-pressure portion). The outlet end of the third introduction pipe (55) is connected to a portion of the third compressor (23) in the course of compression (an intermediate-pressure portion). The first introduction pipe (53) is connected to a flow rate control valve (62). The flow rate control valve (62) is configured as an electronic expansion valve having an adjustable degree of opening. The second introduction pipe (54) is connected to a first open/close valve (63) and a sixth check valve (CV6) in this order from its inlet toward its outlet. The third introduction pipe (55) is connected to a second open/close valve (64) and a seventh check valve (CV7) in this order from its inlet toward its outlet. The first and second open/close valves (63) and (64) are configured as a solenoid valve switching between open and closed positions.

The heat-source-side circuit (20a) is connected to first and second branch pipes (42) and (43). The first branch pipe (42) has two ends respectively connected to a portion of the third liquid pipe (41) near the outlet of the fifth check valve (CV5) and a portion of the first liquid pipe (39) near the outlet of the fourth check valve (CV4). The first branch pipe (42) is connected to an eighth check valve (CV8). The second branch pipe (43) has two ends respectively connected to a portion of the third liquid pipe (41) between the outdoor expansion valve (60) and the fifth check valve (CV5) and a portion of the first liquid pipe (39) near the inlet of the fourth check valve (CV4). The second branch pipe (43) is connected to a ninth check valve (CV9).

A third branch pipe (44) is provided between a portion of the first branch pipe (42) located downstream of the eighth check valve (CV8) and a portion of the first liquid pipe (39) located upstream of the fourth check valve (CV4). The third branch pipe (44) is provided with a tenth check valve (CV10). The tenth check valve (CV10) allows a refrigerant to flow from the first branch pipe (42) toward the outdoor heat exchanger (24) but disallows a refrigerant to flow in the opposite direction.

The four-way valve (27) is switchable between a first state (indicated by the solid curves shown in FIG. 1) and a second state (indicated by the dashed curves shown in FIG. 1). In the first state, a first port (P1) communicates with a third port (P3), and a second port (P2) communicates with a fourth port (P4). In the second state, the first port (P1) communicates with the fourth port (P4), and the second port (P2) communicates with the third port (P3).

### <Cooling Unit>

A target to be processed by the cooling unit (70) is internal air in a freezer, for example. The cooling unit (70) cools the air. The cooling unit (70) includes the utilization-side circuit (70a) and an interior fan (71a). The utilization-side circuit (70a) is connected to the internal heat exchanger (utilization-side heat exchanger) (71), an internal expansion valve (72), and a drain pan heater (73) in this order from its gas-side end toward its liquid-side end.

The internal heat exchanger (71) is a fin-and-tube heat exchanger. The interior fan (71a) is installed near the internal heat exchanger (71). The internal heat exchanger (71) exchanges heat between a refrigerant flowing therethrough and the internal air transferred by the interior fan (71a). An electronic expansion valve is used as the internal expansion valve (72). The drain pan heater (73) is a heat exchanger configured to evaporate drain (ice and water) accumulated in a drain pan (74) below the internal heat exchanger (71) by performing an operation in a defrosting mode.

### <Sensor>

The refrigerating apparatus (10) is provided with various kinds of sensors. Specifically, the first discharge pipe (31) is provided with a first discharge temperature sensor (101) that senses the temperature of a refrigerant discharged from the first compressor (21). The first discharge temperature sensor (101) is provided upstream of the first oil separator (28a). The second discharge pipe (32) is provided with a second discharge temperature sensor (102) that senses the temperature of a refrigerant discharged from the second compressor (22). The second discharge temperature sensor (102) is provided upstream of the second oil separator (28b). The third discharge pipe (33) is provided with a third discharge temperature sensor (103) that senses the temperature of a refrigerant discharged from the third compressor (23). The third discharge temperature sensor (103) is provided upstream of the third oil separator (28c). The main discharge pipe (37) is provided with a discharge pressure sensor (104) that senses the pressure (the high pressure) of a discharged refrigerant. The main suction pipe (38) is provided with an inlet temperature sensor (105) that senses the temperature of a sucked refrigerant, and an inlet pressure sensor (106) that senses the pressure (the low pressure) of the sucked refrigerant.

The liquid side of the outdoor heat exchanger (24) is provided with a first liquid refrigerant temperature sensor (107) that senses the temperature of a refrigerant. The third liquid pipe (41) is provided with a second liquid refrigerant temperature sensor (108) that senses the temperature of a refrigerant. The inlet pipe (51) of the injection circuit (50) is provided with a first intermediate refrigerant temperature sensor (109) that senses the temperature of a refrigerant. The first intermediate refrigerant temperature sensor (109) is provided downstream of the decompression valve (61). The outlet pipe (52) of the injection circuit (50) is provided with a second intermediate refrigerant temperature sensor (110) that senses the temperature of a refrigerant. A third liquid refrigerant temperature sensor (111) is provided near the outlet of the first channel (26a) of the subcooling heat exchanger (26).

An outdoor air temperature sensor (112) that senses the temperature of outdoor air is provided near the outdoor heat exchanger (24). An internal temperature sensor (113) (a temperature sensor) that senses the temperature of the internal space is provided near the internal heat exchanger (71). The internal heat exchanger (71) is provided with an internal heat exchanger temperature sensor (114). The gas side of the internal heat exchanger (71) is provided with an internal gas refrigerant temperature sensor (115). The drain pan heater (73) is provided with a drain pan heater temperature sensor (116).

The refrigerating apparatus (10) according to this embodiment includes a controller (a control unit) (120). This controller (120) controls a normal cooling mode and a defrosting mode. The controller (120) performs control to change, in the defrosting mode in which frost on the internal heat exchanger (71) is removed, the conditions on which the defrosting mode terminates or the defrosting capability in accordance with the period of time during which a stable temperature state (i.e., a state where the temperature of the internal heat exchanger (71) is stable within a predetermined temperature range including 0°C) continues.

Specifically, if the period of time during which the temperature stable state continues is shorter than a predetermined reference period of time, the controller (120) performs control to reduce the target sensed temperature of the internal heat exchanger (71) at which the defrosting mode is to terminate, or to shorten the target period of time during which the defrosting mode is to continue, in order to change the conditions on which the defrosting mode terminates.

If the period of time during which the temperature stable state continues is longer than the predetermined reference period of time, the controller (120) performs control to improve the capabilities of the compressors (21, 22, 23) or to increase the rotational speed of the outdoor fan (24a), in order to improve the capability to operate in the defrosting mode.

### -Operation-

How the refrigerating apparatus (10) according to the embodiment basically operates will be described. The refrigerating apparatus (10) is switchable between the cooling mode in which the cooling unit (70) cools the internal space and the defrosting mode in which frost forming on the internal heat exchanger (71) of the cooling unit (70) is removed.

### <Cooling Mode>

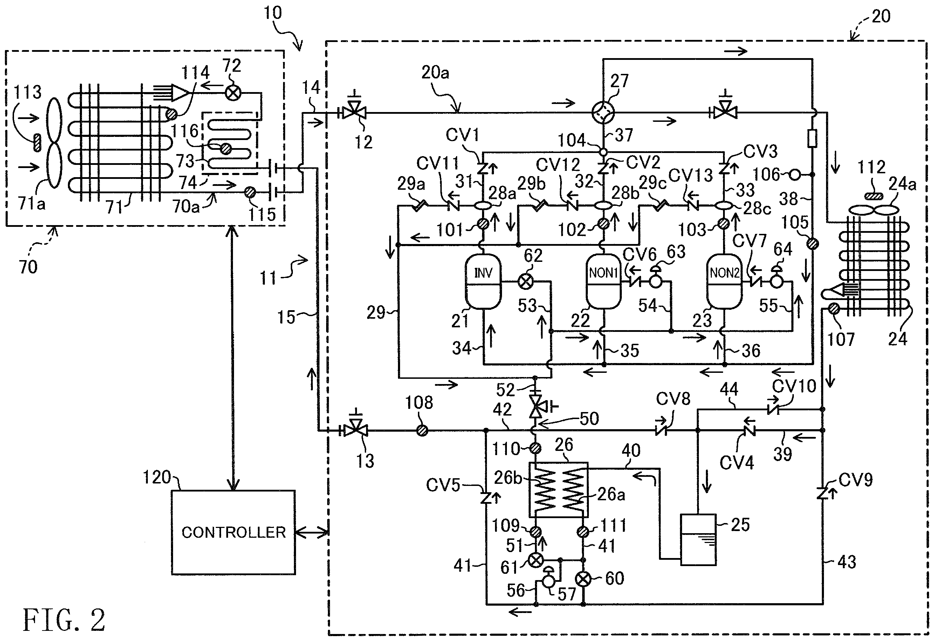

In the outdoor unit (20) in the cooling mode shown in FIG. 2, the four-way valve (27) is in the first state, the outdoor expansion valve (60) is fully opened, the decompression valve (61) and the flow rate control valve (62) have a predetermined degree of opening, the first and second open/close valves (63) and (64) are open, and the outdoor fan (24a) is in operation. In the cooling unit (70) in the cooling mode, the degree of opening of the internal expansion valve (72) is appropriately adjusted, and the interior fan (71a) is in operation.

In the cooling mode, a first refrigeration cycle operation is performed. In the first refrigeration cycle operation, the outdoor heat exchanger (24) serves as a condenser, and the internal heat exchanger (71) serves as an evaporator. Specifically, refrigerants compressed by the compressors (21, 22, 23) join together in the main discharge pipe (37) after being separated from lubricants in the respective oil separators (28a, 28b, 28c). The refrigerant passes through the four-way valve (27), and then flows through the outdoor heat exchanger (24). In the outdoor heat exchanger (24), the refrigerant releases its heat to outdoor air to condense. The refrigerant condensed in the outdoor heat exchanger (24) passes through the first liquid pipe (39), the receiver (25), and the second liquid pipe (40) in this order, and flows through the first channel (26a) of the subcooling heat exchanger (26). Part of the refrigerant which has passed through the first channel (26a) and which flows through the third liquid pipe (41) flows into the inlet pipe (51) of the injection circuit (50), is decompressed by the decompression valve (61), and then flows through the second channel (26b).

The subcooling heat exchanger (26) exchanges heat between a high-pressure liquid refrigerant flowing through the first channel (26a) and an intermediate-pressure refrigerant flowing through the second channel (26b). As a result, while the refrigerant flowing through the first channel (26a) is cooled to increase the degree of subcooling of the refrigerant, the refrigerant flowing through the second channel (26b) evaporates. The refrigerant that has passed through the second channel (26b) flows into the introduction pipes (53, 54, 55) of the injection circuit (50), and is sucked into compression chambers of the compressors (21, 22, 23) in the course of compression (the intermediate-pressure portions).

The refrigerant that has flowed out of the third liquid pipe (41) flows through the interconnecting pipe for liquid (15), and is sent to the utilization-side circuit (70a). In the utilization-side circuit (70a), the refrigerant is decompressed by the internal expansion valve (72), and then flows through the internal heat exchanger (71). In the internal heat exchanger (71), the refrigerant absorbs heat from inside air to evaporate. As a result, the inside air is cooled. The refrigerant that has evaporated in the internal heat exchanger (71) passes through the interconnecting pipe for gas (14), and is sent to the heat-source-side circuit (20a). In the heat-source-side circuit (20a), the refrigerant passes through the four-way valve (27), and is sucked into the compressors (21, 22, 23) through the respective suction pipes (34, 35, 36).

In the first through third oil separators (28a, 28b, 28c), the lubricant separated from the refrigerant discharged from the first through third compressors (21, 22, 23) passes through the oil return pipe (29), is joined to the refrigerant in the injection circuit (50), and is sent back to the first through third compressors (21, 22, 23).

### <Defrosting Mode>

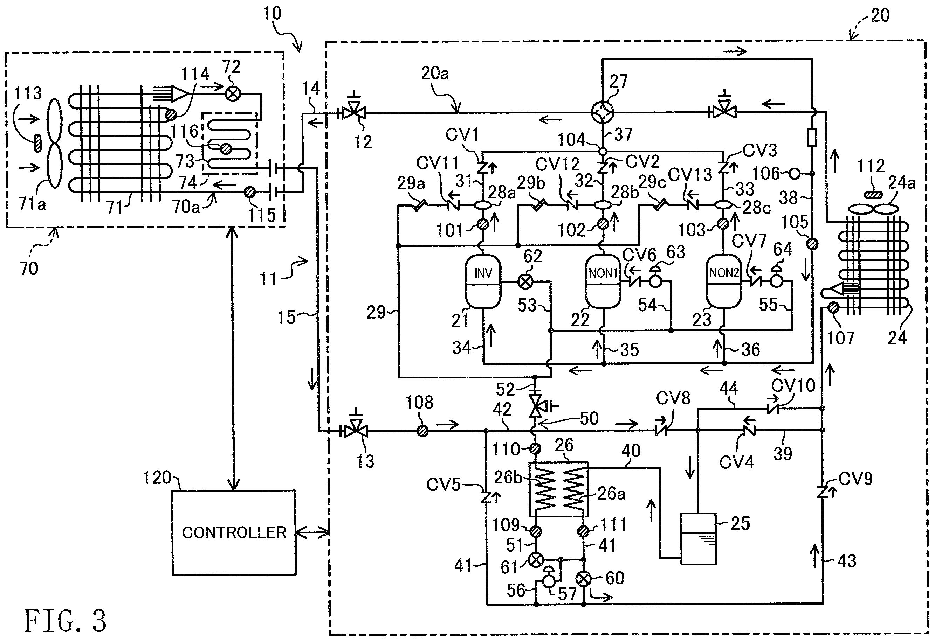

In the outdoor unit (20) in the defrosting mode shown in FIG. 3, the four-way valve (27) is in the second state, and the decompression valve (61), the flow rate control valve (62), the first open/close valve (63), and the second open/close valve (64) are closed. The degree of opening of the outdoor expansion valve (60) is adjusted to a predetermined degree of opening. The outdoor fan (24a) is in operation. In the cooling unit (70) in the defrosting mode, the internal expansion valve (72) is generally fully opened, and the interior fan (71a) is in operation.

In the defrosting mode, a second refrigeration cycle operation is performed. In the second refrigeration cycle operation, the internal heat exchanger (71) serves as a condenser, and the outdoor heat exchanger (24) serves as an evaporator. Specifically, refrigerants compressed by the compressors (21, 22, 23) join together in the main discharge pipe (37) after being separated from lubricants in the respective oil separators (28a, 28b, 28c). The refrigerant passes through the four-way valve (27) and the interconnecting pipe for gas (14), and is then sent to the utilization-side circuit (70a). In the utilization-side circuit (70a), the refrigerant flows through the internal heat exchanger (71). In the internal heat exchanger (71), heat of the refrigerant is transferred through a heat exchanger tube to frost surrounding the heat exchanger tube. This allows frost forming on the heat exchanger tube of the internal heat exchanger (71) to melt. As a result, frost on the internal heat exchanger (71) is removed. The refrigerant that has released its heat in the internal heat exchanger (71) passes through the internal expansion valve (72) and the liquid interconnecting line (15) in this order, and is sent to the heat-source-side circuit (20a). The drain accumulated in the drain pan (74) is heated by the drain pan heater (73).

In the heat-source-side circuit (20a), the refrigerant passes through the third liquid pipe (41), the first branch pipe (42), the receiver (25), the second liquid pipe (40), and the first channel (26a) of the subcooling heat exchanger (26) in this order, and flows through the outdoor expansion valve (60) in the second liquid pipe (40). In the outdoor expansion valve (60), the refrigerant is decompressed to a low pressure. In this case, the degree of opening of the outdoor expansion valve (60) is adjusted so that the degree of superheat of the refrigerants sucked into the compressors (21, 22, 23) approaches a target value.

The refrigerant decompressed by the outdoor expansion valve (60) passes through the second branch pipe (43), and flows through the outdoor heat exchanger (24). In the outdoor heat exchanger (24), the refrigerant absorbs heat from outdoor air to evaporate. The refrigerant that has evaporated in the outdoor heat exchanger (24) passes through the four-way valve (27), and is sucked into the compressors (21, 22, 23) through the respective suction pipes (34, 35, 36).

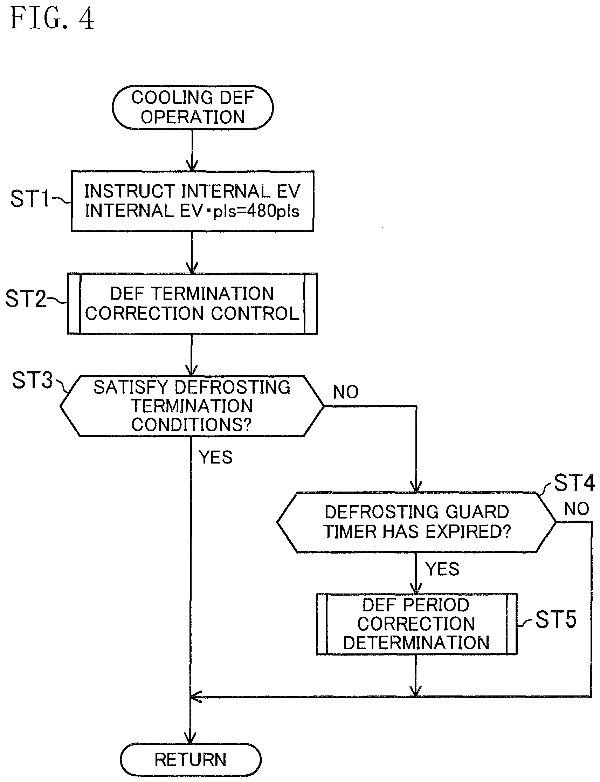

Next, operation of the refrigerating apparatus (1) in the defrosting mode will be specifically described with reference to FIGS. 4-7.

If the defrosting mode is started, a signal that instructs the internal expansion valve (72) to open to a degree of opening is sent thereto in step ST1 of the flowchart shown in FIG. 4. The signal of 480 pulses allows the internal expansion valve (72) to be fully open. Performing reverse cycle defrosting in this state allows hot gas discharged from the compressors (21, 22, 23) to all flow through the internal heat exchanger (72). As a result, the frost forming on the internal heat exchanger (72) melts, and is thus removed.

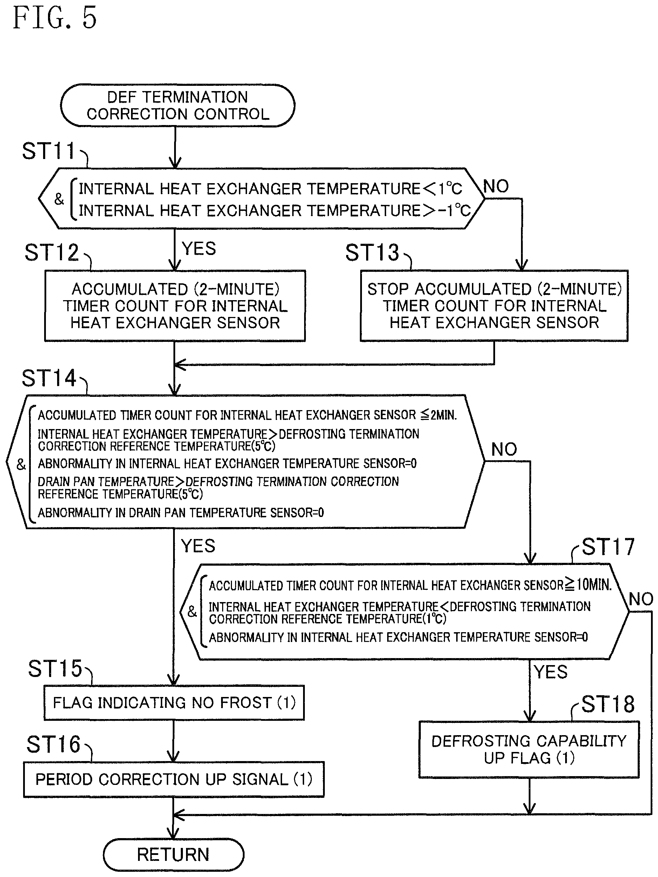

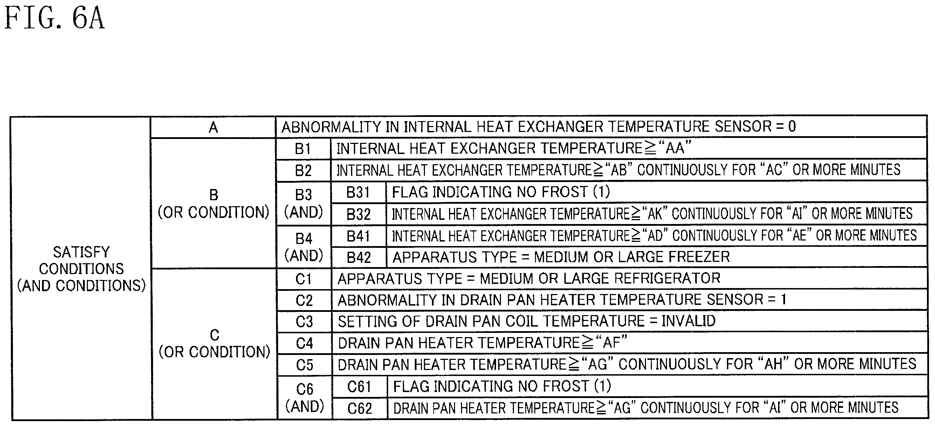

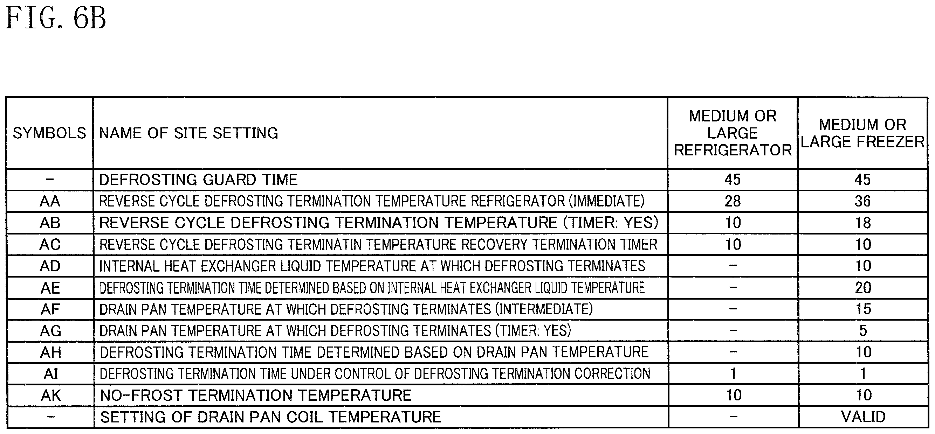

In step ST2, subroutines of defrosting termination correction control shown in the flowchart of FIG. 5 are performed. If the subroutines of defrosting termination correction control are performed, then a determination is made, in step ST3, whether or not the conditions on which defrosting terminates are satisfied. The conditions will be described below, and are shown in FIG. 6. Note that in the flowchart of this embodiment, the hexagonal symbols are used to represent a determination. If the conditions on which defrosting terminates are satisfied, the process returns. On the other hand, if the determination in step ST3 shows that the conditions on which defrosting terminates are not satisfied, a determination is made, in step ST4, whether or not the time set by a defrosting guard timer has elapsed. If the time set by the defrosting guard timer has not elapsed yet, the process returns. If the time set by the defrosting guard timer has elapsed, the period of time during which the defrosting is performed has increased although the conditions on which the defrosting terminates are not satisfied. Thus, after a subroutine for determining whether or not the defrosting period should be corrected has been performed, the process returns to control of the main cooling mode.

The conditions on which defrosting terminates will now be described with reference to FIG. 6. The conditions on which defrosting terminates are satisfied by satisfying all of the conditions A, B, and C shown in FIG. 6. The condition B is satisfied by satisfying the condition B1, B2, B3, or B4. The condition C is satisfied by satisfying the condition C1, C2, C3, C4, C5, or C6. Moreover, the condition B3 is satisfied by satisfying both of the conditions B31 and B32. The condition B4 is satisfied by satisfying both of the conditions B41 and B42. The condition C6 is satisfied by satisfying both of the conditions C61 and C62. FIG. 6A shows the conditions to be satisfied, and FIG. 6B shows temperatures and periods of time serving as the conditions to be satisfied (the values "AA" to "AK" shown in FIG. 6A).

First, unless the internal heat exchanger temperature sensor is abnormal, the condition A is satisfied.

The condition B is satisfied if any one of the conditions B31 and B32, any one of the conditions B41 and B42, and the conditions B1-B4 are all satisfied. The condition B1 corresponds to a state where the temperature sensed by the internal heat exchanger temperature sensor is higher than or equal to "AA (36°C)." The condition B2 corresponds to a state where the temperature sensed by the internal heat exchanger temperature sensor is kept at "AB (18°C)" or higher continuously for "AC (10 minutes)" or more. The condition B31 in the condition B3 corresponds to a state where a flag indicating no frost is set. The condition B32 in the condition B3 corresponds to a state where the temperature sensed by the internal heat exchanger temperature sensor is kept at "AK (10°C)" or higher for "AI (one minute)" or more. The condition B41 in the condition B4 corresponds to a state where the temperature sensed by the internal heat exchanger temperature sensor is kept at "AD (10°C)" or higher continuously for "AE (20 minutes)" or more. The condition B42 in the condition B4 corresponds to a state where a container is a medium or large freezer.

The condition C is satisfied if any one of the conditions C61 and C62 and the conditions C1, C2, C3, C4, C5, and C6 are all satisfied. The condition C1 corresponds to a state where the container is a medium or large refrigerator shown in the table of FIG. 6(B). The condition C2 corresponds to a state where the drain pan heater temperature sensor is not abnormal. The condition C3 corresponds to a state where the set drain pan coil temperature is invalid. The condition C4 corresponds to a state where the drain pan heater temperature is "AF (15°C)" or higher. The condition C5 corresponds to a state where the drain pan heater temperature is kept at "AG (5°C)" or higher continuously for "AH (10 minutes)" or more. The condition C61 in the condition C6 corresponds to a state where a flag indicating no frost is set. The condition C62 in the condition C6 corresponds to a state where the drain pan heater temperature is kept at "AG (5°C)" or higher continuously for AI (one minute)" or more.

In the foregoing manner, a determination is made whether or not the conditions on which defrosting terminates are satisfied. The flowchart shown in FIG. 4 proceeds in accordance with the determination result.

Meanwhile, specific operations of subroutines of the defrosting termination correction control shown in step ST2 of FIG. 4 are performed with reference to FIG. 5. In step ST11 of FIG. 5 in the flow, a determination is made whether or not the temperature sensed by the internal heat exchanger temperature sensor (114) is lower than 1°C and higher than -1°C (whether or not the temperature of the internal heat exchanger (71) is stable within a predetermined temperature range including 0°C, i.e., whether or not the internal heat exchanger (71) is in a temperature stable state).

If the result of the determination in step ST11 is "YES," an accumulated timer (two minutes) for the internal heat exchanger temperature sensor (114) starts counting in step ST12. Then, the process proceeds to step ST14. If the result of the determination in step ST11 is "NO," the (two-minute) accumulated timer for the internal heat exchanger temperature sensor (114) stops counting in step ST13. Then, the process proceeds to step ST14. The (two-minute) accumulated timer is used to perform control to change the conditions on which defrosting terminates or the defrosting capability in accordance with the period of time during which the temperature stable state continues.

In step ST14, a determination is made whether or not all of the following conditions are satisfied. Specifically, the count of the accumulated timer of the internal heat exchanger temperature sensor (114) is less than or equal to two minutes, the temperature sensed by the internal heat exchanger temperature sensor (114) is higher than a defrosting termination correction reference value (5°C), the internal heat exchanger temperature sensor (114) is not abnormal, the temperature sensed by the drain pan heater temperature sensor (116) is higher than the defrosting termination correction reference value (5°C), and the drain pan heater temperature sensor (116) is not abnormal.

If the result of the determination in step ST14 is "YES" a determination is made that defrosting has terminated normally. In step ST15, the flag indicating no frost is set to be one (no frost), and in step ST16, the defrosting period is extended by a period correction up signal. Then, the process returns. Conversely, if the result of the determination in step ST14 is "NO," defrosting has not terminated yet. In that case, in step ST17, a determination is made whether or not all of the following conditions are satisfied. Specifically, the count of the accumulated timer of the internal heat exchanger temperature sensor (114) is greater than or equal to 10 minutes, the temperature sensed by the internal heat exchanger temperature sensor (114) is lower than the defrosting termination correction reference value (1°C), and the internal heat exchanger temperature sensor (114) is not abnormal. If the result of this determination is "YES," a defrosting capability up flag is set to be one (improve capability) in step ST18, and then the process returns. If the result of the determination is "NO," the process returns without changing the setting.

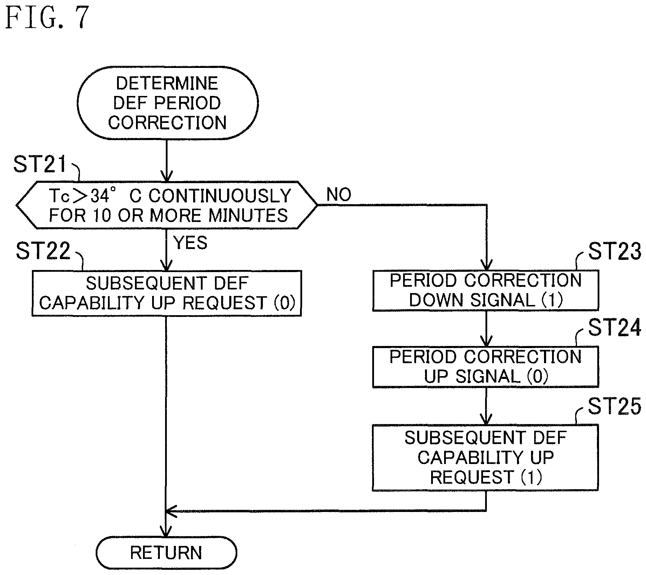

Subroutines of a determination of whether or not the defrosting period should be corrected, shown in step ST5 of FIG. 4, are performed with reference to FIG. 7. Specifically, in step ST21, a determination is made whether or not the condensing temperature Tc has been continuously higher than 34°C for ten or more minutes. If the result of the determination is "YES," this shows that the defrosting has been performed for a long time. Thus, in step ST22, a request to improve the capability of operation in the subsequent defrosting mode is issued, and then the process returns. Conversely, if the result of the determination in step ST21 is "NO," the period correction down signal is set in step ST23, the period correction up signal is reset in step ST24, and subsequent defrosting capability up request flag is used to adjust a target high pressure in the subsequent defrosting operation in step ST25. Then, the process returns.

In the foregoing manner, in this embodiment, the controller (120) performs control to change the conditions on which defrosting terminates or the defrosting capability in accordance with the period of time during which the temperature stable state (i.e., a state where the temperature of the internal heat exchanger (71) is stable within a predetermined temperature range including 0°C) continues, during the defrosting mode in which frost on the internal heat exchanger (71) is removed.

As described above, if the period of time during which the temperature stable state continues is shorter than a predetermined reference period of time, the controller (120) performs control to change the conditions on which the defrosting mode terminates, to reduce the target sensed temperature of the internal heat exchanger (71) at which defrosting is to terminate, or to shorten the target period of time during which the defrosting mode is to continue.

In this embodiment, on the contrary, if the period of time during which the temperature stable state continues is longer than the predetermined reference period of time, the controller (120) performs control to improve the capability of operation in the defrosting mode, to improve the capabilities of the compressors (21, 22, 23), or to increase the rotational speed of the exterior fan (24a).

### -Advantages of Embodiment-

According to the embodiment, the controller (120) can perform control to change the conditions on which defrosting terminates or the defrosting capability in accordance with the period of time during which the temperature stable state continues. Thus, if control is performed so that an increase in the period of time during which the temperature stable state continues allows the defrosting mode to terminate at an earlier timing, the period of time during which the defrosting mode is performed can be prevented from being longer than required, without manually setting the conditions on which the defrosting mode terminates.

In particular, according to this embodiment, if the period of time during which the temperature stable state continues is shorter than the reference period of time, control is performed to reduce the target sensed temperature of the internal heat exchanger (71) at which defrosting is to terminate or to shorten the target period of time during which the defrosting mode is to continue. This can prevent the period of time during which the defrosting mode is performed from being longer than required.

According to this embodiment, if the period of time during which the temperature stable state continues is longer than the reference period of time, control is performed to improve the capabilities of the compressors (21, 22, 23) or to increase the rotational speed of the exterior fan (24a). This can prevent the period of time during which the defrosting mode is performed from being longer than required.

### <<Other Embodiments>>

The foregoing embodiment may also have the following structures.

For example, in the foregoing embodiment, if the period of time during which the temperature stable state continues is shorter than a predetermined reference period of time, control is performed to reduce the target sensed temperature of the internal heat exchanger (71) at which defrosting is to terminate, or to shorten the target period of time during which the defrosting mode is to continue, in order to change the conditions on which the defrosting mode terminates. However, specific control may be performed in a different way as long as a similar function is provided.

If the period of time during which the temperature stable state continues is longer than the predetermined reference period of time, control is performed to improve the capabilities of the compressors (21, 22, 23), or to increase the rotational speed of the exterior fan (24a), in order to improve the capability of operation in the defrosting mode. However, specific control may also be performed in a different way.

In the foregoing embodiment, an example in which the present invention is applied to control performed while reverse cycle defrosting is being performed has been described. However, the present invention may be applied to control in a defrosting mode performed in a different way.

In summary, the other structures of the present invention may be appropriately changed as long as control is performed to change the conditions on which defrosting terminates or the defrosting capability in accordance with the period of time during which the temperature stable state (i.e., a state where the temperature of the internal heat exchanger is stable within a predetermined temperature range including 0°C) continues, in the defrosting mode in which frost on the internal heat exchanger is removed.

Note that the foregoing description of the embodiment is a merely beneficial example in nature, and is not intended to limit the scope, application, or uses of the present invention as defined by the appended claims.

### INDUSTRIAL APPLICABILITY

As can be seen from the foregoing description, the present invention is useful for a refrigerating apparatus including a refrigerant circuit with an internal heat exchanger that cools an internal space by a refrigeration cycle operation, and a controller that controls operations in cooling and defrosting modes.

### DESCRIPTION OF REFERENCE CHARACTERS

- 10: Refrigerating Apparatus
- 11: Refrigerant Circuit
- 21: First Compressor
- 22: Second Compressor
- 23: Third Compressor
- 24a: Exterior Fan
- 71: Internal Heat Exchanger
- 120: Controller

## Claims

1. A refrigerating apparatus comprising:
a refrigerant circuit (11) including an internal heat exchanger (71) configured to cool an internal space by a refrigeration cycle operation; and a controller (120) configured to control an operation in a cooling mode and an operation in a defrosting mode, wherein
the controller (120) performs control to change conditions on which defrosting terminates or defrosting capability in accordance with a period of time during which a temperature stable state continues, in the defrosting mode in which frost on the internal heat exchanger (71) is removed, and the temperature stable state corresponds to a state where a temperature of the internal heat exchanger (71) is stable within a predetermined temperature range including 0°C,
if the period of time during which the temperature stable state continues is shorter than a predetermined reference period of time, the controller (120) performs control to change the conditions on which the defrosting terminates, wherein the controller (120) performs control to shorten a target period of time during which the defrosting mode is to continue.

2. The refrigerating apparatus of claim 1, wherein
if the period of time during which the temperature stable state continues is shorter than the predetermined reference period of time, the controller (120) performs control to reduce a target sensed temperature of the internal heat exchanger (71) at which defrosting is to terminate.

3. The refrigerating apparatus of any one of the preceding claims, wherein
if the period of time during which the temperature stable state continues is longer than the predetermined reference period of time, the controller (120) performs control to improve capability of operation in the defrosting mode.

4. The refrigerating apparatus of any one of the preceding claims, wherein
if the period of time during which the temperature stable state continues is longer than the predetermined reference period of time, the controller (120) performs control to improve capabilities of compressors (21, 22, 23).

5. The refrigerating apparatus of any one of the preceding claims, wherein
if the period of time during which the temperature stable state continues is longer than the predetermined reference period of time, the controller (120) performs control to increase a rotational speed of an exterior fan (24a).

## Patentansprüche

1. Kühleinrichtung, die Folgendes umfasst:
einen Kältemittelkreislauf (11), der einen internen Wärmetauscher (71) einschließt, der konfiguriert ist, um einen internen Raum durch einen Kühlzyklusbetrieb zu kühlen; und eine Steuerung (120), die konfiguriert ist, um einen Betrieb in einem Kühlmodus und einen Betrieb in einem Entfrostungsmodus zu steuern, wobei
die Steuerung (120) Steuerung ausführt, um Bedingungen zu ändern, bei welchen ein Entfrosten endet oder eine Entfrostungsfähigkeit in Übereinstimmung mit einer Zeitspanne, während der ein beständiger Temperaturzustand fortdauert, in dem Entfrostungsmodus, bei dem Frost auf dem inneren Wärmetauscher (71) entfernt wird, und der beständige Temperaturzustand einem Zustand entspricht, in dem eine Temperatur des internen Wärmetauschers (71) innerhalb eines vorbestimmten Temperaturbereichs, einschließlich 0°C, beständig ist,
falls die Zeitspanne, während der der beständige Temperaturzustand fortdauert, kürzer ist als eine vorbestimmte Referenzzeitspanne, die Steuerung (120) Steuerung ausführt, um die Bedingungen zu ändern, bei welchen das Entfrosten endet, wobei die Steuerung (120) Steuerung ausführt, um eine Zielzeitspanne, während der der Entfrostungsmodus fortdauern soll, zu kürzen.

2. Kühleinrichtung nach Anspruch 1, wobei,
falls die Zeitspanne, während der der beständige Temperaturzustand fortdauert, kürzer ist als die vorbestimmte Referenzzeitspanne, die Steuerung (120) Steuerung ausführt, um eine erfasste Zieltemperatur des internen Wärmetauschers (71), bei der das Entfrosten enden soll, zu reduzieren.

3. Kühleinrichtung nach einem der vorstehenden Ansprüche, wobei,
falls die Zeitspanne, während der der beständige Temperaturzustand fortdauert, länger ist als die vorbestimmte Referenzzeitspanne, die Steuerung (120) Steuerung ausführt, um die Betriebsfähigkeit in dem Entfrostungsmodus zu verbessern.

4. Kühleinrichtung nach einem der vorstehenden Ansprüche, wobei,
falls die Zeitspanne, während der der beständige Temperaturzustand fortdauert, länger ist als die vorbestimmte Referenzzeitspanne, die Steuerung (120) Steuerung ausführt, um Fähigkeiten von Kompressoren (21, 22, 23) zu verbessern.

5. Kühleinrichtung nach einem der vorstehenden Ansprüche, wobei,
falls die Zeitspanne, während der der beständige Temperaturzustand fortdauert, länger ist als die vorbestimmte Referenzzeitspanne, die Steuerung (120) Steuerung ausführt, um eine Drehzahl eines externen Gebläses (24a) zu steigern.

## Revendications

1. Appareil de réfrigération comprenant :
un circuit de réfrigérant (11) incluant un échangeur de chaleur interne (71) configuré pour refroidir un espace interne par une opération de cycle de réfrigération ; et un dispositif de commande (120) configuré pour commander une opération dans un mode de refroidissement et une opération dans un mode de décongélation, dans lequel
le dispositif de commande (120) réalise une commande pour changer des conditions au niveau desquelles la décongélation se termine ou la capacité de décongélation selon une période de temps pendant laquelle un état stable de température continue, dans le mode de décongélation dans lequel du givre sur l'échangeur de chaleur interne (71) est retiré, et l'état stable de température correspond à un état où une température de l'échangeur de chaleur interne (71) est stable dans une plage de température prédéterminée incluant 0°C,
si la période de temps pendant laquelle l'état stable de température continue est plus courte qu'une période de temps de référence prédéterminée, le dispositif de commande (120) réalise une commande pour changer les conditions au niveau desquelles la décongélation se termine, dans lequel le dispositif de commande (120) réalise une commande pour raccourcir une période de temps cible pendant laquelle le mode de décongélation doit continuer.

2. Appareil de réfrigération selon la revendication 1, dans lequel
si la période de temps pendant laquelle l'état stable de température continue est plus courte que la période de temps de référence prédéterminée, le dispositif de commande (120) réalise une commande pour réduire une température détectée cible de l'échangeur de chaleur interne (71) à laquelle la décongélation doit se terminer.

3. Appareil de réfrigération selon l'une quelconque des revendications précédentes, dans lequel
si la période de temps pendant laquelle l'état stable de température continue est plus longue que la période de temps de référence prédéterminée, le dispositif de commande (120) réalise une commande pour améliorer la capacité d'opération dans le mode de décongélation.

4. Appareil de réfrigération selon l'une quelconque des revendications précédentes, dans lequel
si la période de temps pendant laquelle l'état stable de température continue est plus longue que la période de temps de référence prédéterminée, le dispositif de commande (120) réalise une commande pour améliorer les capacités des compresseurs (21, 22, 23).

5. Appareil de réfrigération selon l'une quelconque des revendications précédentes, dans lequel
si la période de temps pendant laquelle l'état stable de température continue est plus longue que la période de temps de référence prédéterminée, le dispositif de commande (120) réalise une commande pour augmenter une vitesse de rotation d'un ventilateur extérieur (24a).
